# EUROPEAN PATENT SPECIFICATION

(11) **EP 2 388 164 B1**
(45) Date of publication and mention of the grant of the patent: **15.07.2020**
(21) Application number: 11165777.1
(22) Date of filing: 12.05.2011
(51) Int. Cl.: B60Q 1/14

(54) **Vehicle Headlamp system, control device, vehicle headlamp, and control method of vehicle headlamp**
Fahrzeugscheinwerfersystem, Steuervorrichtung, Fahrzeugscheinwerfer und Steuerverfahren des Fahrzeugscheinwerfers
Système de phare de véhicule, dispositif de contrôle, phare de véhicule et procédé de contrôle de phare de véhicule

(30) Priority: 20.05.2010 JP 2010116245
(43) Date of publication of application: 23.11.2011
(73) Proprietor: Koito Manufacturing Co., Ltd., Tokyo 108-8711 (JP)
(72) Inventor: Hori, Takashi, Shizuoka-shi Shizuoka (JP); Mochizuki, Kiyotaka, Shizuoka-shi Shizuoka (JP)
(74) Representative: Grünecker Patent- und Rechtsanwälte PartG mbB

(56) References cited:
- DE-A1-102008 025 457
- US-B1- 6 343 869

## Description

### TECHNICAL FIELD

The present invention relates to a control device for a vehicle lamp, a vehicle lamp system, and a control method of a vehicle lamp, and particularly, to a control device for a vehicle lamp, a vehicle lamp system, and a control method of a vehicle lamp which are used for automobiles or the like.

### BACKGROUND ART

Generally, a vehicle lamp system used for a vehicle headlight is able to switch between a low beam and a high beam. The low beam illuminates the area nearby with a predetermined luminance so that glare is not imparted to a front vehicle, which can include an oncoming vehicle or a leading vehicle, and is used when the vehicle travels mainly in an urban area. On the other hand, the high beam illuminates a wide range ahead or a distant area with relatively high illuminance, and is used in a case where a vehicle travels at high speed on a road where there are few vehicles in front.

Although the high beam is comparatively better in terms of driver visibility than the low beam, there is a problem in that glare can be imparted to drivers of other vehicles. Accordingly, the low beam is often used particularly when traveling at night in an urban area and a high-beam light source is not used when the low beam is used. Nevertheless, the demand to improve driver visibility of a road when the low beam is used persists.

On the one hand, DE 10 2008 025 457 A1, which is considered to be the closest prior art, discloses an adaptive high-beam assist with the headlamps being controlled based on image data from a camera. If the road is clear, the system switches to high beam so that the driver has an optimal view at all times. However, if oncoming vehicles and vehicle in front are detected, the headlamps are controlled in such a way that the light beam ends in front of the other vehicles. Moreover, DE 10 2008 025 457 A1 proposes to deactivate the high-beam assist on the side of the oncoming vehicles when the presence of an obstacle (e. g. bushes) is determined based on the image data acquired by the front camera.

On the other hand, JP 2010 000957 A discloses a vehicle headlight device including a lamp capable of radiating a left-added light distribution pattern including a region on the left of a vertical line above a cut-off line of a low-beam light distribution pattern, and a right-added light distribution pattern including a region on the right of the vertical line thereabove, and controlling so as to radiate the left-added light distribution pattern or the right-added light distribution pattern according to the position of a vehicle.

When automatic formation control of an added light distribution pattern according to the position of the vehicle in front is performed, a method of detecting the vehicle in front on the basis of light spots, such as a headlight or a tail light of the vehicle in front, can be considered. However, in this method, there is a possibility that the vehicle in front cannot be detected depending on the conditions around the subject vehicle. For example, a shading body, such as a greening fence or a plant, may be provided along the road between a subject lane and an opposite lane depending on the road. In this situation, the headlights of a front vehicle in the opposite lane side, i.e., an oncoming vehicle may be hidden by the shading body, and the oncoming vehicle cannot be detected.

In a case where the above automatic formation control of a light distribution pattern is executed under such conditions, the oncoming vehicle is considered to be absent irrespective of whether the oncoming vehicle is actually present, and a light distribution pattern which has a high beam region on the opposite lane side is formed. Then, there is a possibility that a portion of the formed light distribution pattern irradiates the opposite lane side over the shading body, and thereby, glare is imparted to the oncoming vehicle. Particularly, in a case where the oncoming vehicle is a truck with a high seat position, glare is apt to be imparted to the oncoming vehicle.

### SUMMARY

According to the present invention, the above problems are solved by a control device for a vehicle lamp as defined in independent claim 1, a vehicle lamp system as defined in independent claim 2, and a control method of a vehicle lamp as defined in independent claim 3.

Exemplary embodiments of the invention have been made in view of the above problems, and an embodiment of the invention may provide a technique capable of forming an appropriate light distribution pattern in a case where automatic formation control of a light distribution pattern according to the position of a vehicle in front on a road where a shading body is present between a subject lane and an opposite lane is implemented.

Thus, a vehicle lamp system according to an embodiment comprises:
a vehicle lamp capable of forming a light distribution pattern which has an irradiation region on an opposite lane side above a horizontal line; and
a controller controlling the vehicle lamp,
wherein the controller avoids formation of the light distribution pattern when a shading body is present along a road between a subject vehicle and an opposite lane.

According to this embodiment, it is possible to form an appropriate light distribution pattern when automatic formation control of a light distribution pattern according to the position of a vehicle in front on a road where a shading body is present between a subject lane and an opposite lane is implemented.

The controller may control the vehicle lamp according to the position of a vehicle in front recognized based on a light spot detected ahead of a subject vehicle, and avoid formation of the light distribution pattern in a case where the light spot of a predetermined time or less is detected. Further, the controller may avoid formation of the light distribution pattern when the detection of the light spot for the predetermined time or less is performed more than or equal to a predetermined number of times within a unit time. According to these embodiments, it is possible to form an appropriate light distribution pattern with the cheaper structure in a case where automatic formation control of a light distribution pattern according to the position of a front vehicle on a road where a shading body is present.

Further, a control device according to an embodiment is a control device for a vehicle lamp capable of forming a light distribution pattern which has an irradiation region on an opposite lane side above a horizontal line,
wherein the control device avoids output of a control signal forming the light distribution pattern when a shading body is present along a road between a subject vehicle and an opposite lane.

Furthermore, a vehicle lamp according to an embodiment is a vehicle lamp capable of forming a light distribution pattern which has an irradiation region on an opposite lane side above a horizontal line,
wherein the vehicle lamp avoids formation of the light distribution pattern when a shading body is present along a road between a subject vehicle and an opposite lane.

Further, a control method according to an embodiment is a control method of a vehicle lamp capable of forming a light distribution pattern which has an irradiation region on an opposite lane side above a horizontal line,
wherein the control method avoids formation of the light distribution pattern when a vehicle which travels on an opposite lane is not detectable.

According to these embodiments, it is possible to form an appropriate light distribution pattern when automatic formation control of a light distribution pattern according to the position of a front vehicle on a road where a shading body is present between a subject lane and an opposite lane is implemented.

### BRIEF DESCRIPTION OF THE DRAWINGS

Fig. 1 is a schematic vertical sectional view illustrating the internal structure of a vehicle lamp system related to Embodiment 1.
Fig. 2 is a schematic perspective view of the rotary shade.
Fig. 3 is a functional block diagram illustrating the cooperation between an irradiation controller of a headlight unit, and a vehicle controller on the side of the vehicle.
Figs. 4A-4F are views illustrating shapes of light distribution patterns.
Fig. 5 is a schematic view illustrating formation control of a light distribution pattern by the vehicle lamp system related to Embodiment 1.
Fig. 6 is a control flow chart of the formation of a light distribution pattern in the vehicle lamp system related to Embodiment 1.
Fig. 7 is a schematic view illustrating formation control of a light distribution pattern by the vehicle lamp system related to Embodiment 2.

### DETAILED DESCRIPTION

Aspects of the invention will now be described below, with reference to the drawings, which show embodiments thereof. The same or equivalent constituent elements, members, and processes in the respective drawings will be designated by the same reference numerals, and duplicate description thereof will be appropriately omitted. Additionally, the embodiments shown do not limit the invention but are merely illustrative, and all features or combinations described in the embodiments are not necessarily limited as being essential to the invention.

### (Embodiment 1)

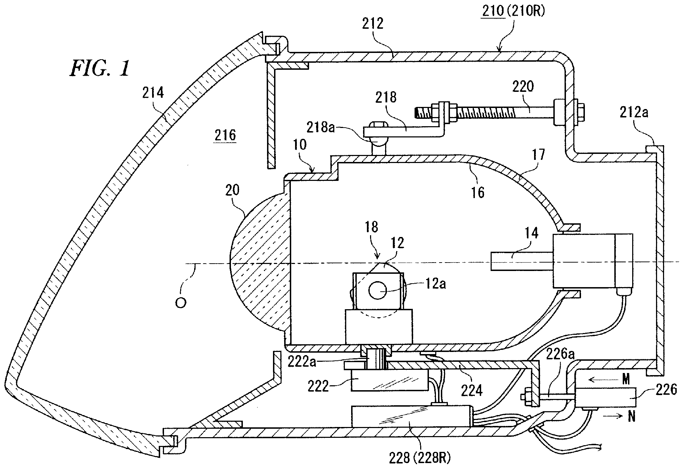

Fig. 1 is a schematic vertical sectional view illustrating the internal structure of a vehicle lamp system related to Embodiment 1. A vehicle lamp system 200 of the present embodiment is a light distribution variable headlight system in which a pair of headlight units are symmetrically arranged on the right and left sides of a vehicle in a vehicle width direction. Since the headlight units arranged on the right and left have substantially the same configuration except that the headlight units have a bilaterally symmetrical structure, the structure of the right headlight unit 210R will be described, and description of the left headlight unit will be appropriately omitted. In addition, in a case where respective members of the left headlight unit are described, the respective members will be designated by the same reference numerals as those of corresponding members of the headlight unit 210R for convenience of description.

The headlight unit 210R has a lamp body 212 having an opening on the front side of the vehicle, and a translucent cover 214 which covers the opening. The lamp body 212 has a detachable cover 212a which can be removed, for example, when replacing of a bulb 14 on the rear side of the vehicle. A lamp chamber 216 is formed by the lamp body 212 and the translucent cover 214. A lamp unit 10 (vehicle lamp) which irradiates light toward the front of the vehicle is housed in the lamp chamber 216.

A portion of the lamp unit 10 is formed with a lamp bracket 218 which has a pivot mechanism 218a which becomes the center of oscillation in up, down, right, and left directions of the lamp unit 10. The lamp bracket 218 is screwed to aiming adjusting screw 220 rotatably supported by the wall surface of the lamp body 212. Accordingly, the lamp unit 10 is fixed to a predetermined position within the lamp chamber 216 determined in the adjusted state of the aiming adjusting screw 220, and its posture can be changed to a forward tilted posture, a rearward tilted posture, or the like about the pivot mechanism 218a on the basis of the position.

Additionally, a rotary shaft 222a of a swivel actuator 222 for constituting a light distribution variable headlight for a curved road (Adaptive Front-lighting System: AFS) or the like which illuminates a traveling direction, such as when traveling along a curved road, is fixed to a lower surface of the lamp unit 10. The swivel actuator 222 swivels the lamp unit 10 about the pivot mechanism 218a in the traveling direction, on the basis of data of a steering amount provided from the vehicle side, the shape data of a road being traveled along provided from a navigation system, and the relationship in relative position between a preceding vehicle including an oncoming vehicle and a leading vehicle, and a subject vehicle. As a result, the irradiation region of the lamp unit 10 is directed not to the front of the vehicle but to the edge of a curve of a curved road, thereby improving driver front visibility. The swivel actuator 222 can be constituted by, for example, a stepping motor. In addition, in a case where the swivel angle has a fixed value, a solenoid or the like can also be used.

A swivel actuator 222 is fixed to a unit bracket 224. A leveling actuator 226 arranged outside the lamp body 212 is connected to a unit bracket 224. The leveling actuator 226 is constituted by, for example, a motor or the like which extends or retracts a rod 226a in the direction of an arrow M or N. In a case where the rod 226a is extended in the direction of the arrow M, the lamp unit 10 oscillates so as to take a rearward tilted posture about the pivot mechanism 218a. On the contrary, in a case where the rod 226a is retracted in the direction of the arrow N, the lamp unit 10 oscillates so as to take a forward tilted posture about the pivot mechanism 218a. When the lamp unit 10 takes a rearward tilted posture, leveling adjustment of directing the optical axis O upward can be performed. Additionally, when the lamp unit 10 takes a forward tilted posture, leveling adjustment of directing the optical axis O downward can be performed. By implementing such leveling adjustment, optical-axis adjustment according to the posture of the vehicle can be performed. As a result, the reaching distance of front irradiation light by the vehicle lamp system 200 can be adjusted to an optimal distance.

In addition, this leveling adjustment can also be executed according to a vehicle posture when the vehicle is traveling. For example, in a case where a vehicle accelerates while the vehicle travels, the vehicle posture becomes a rearward tilted posture. On the contrary, in case where the vehicle decelerates, the vehicle posture becomes a forward tilted posture. Accordingly, the irradiation direction of the vehicle lamp system 200 also fluctuates up and down in response to the posture state of the vehicle, and the front irradiation distance becomes long or short. Thus, the reaching distance of the front irradiation can be optimally adjusted even when traveling by executing the leveling adjustment of the lamp unit 10 in real time on the basis of a vehicle posture. This may be referred to as "auto-leveling".

An irradiation controller 228 (controller or control device) which executes control of turning the lamp unit 10 on/off or control of formation of a light distribution pattern is arranged on the inner wall surface of the lamp chamber 216 below the lamp unit 10. In the case of Fig. 1, an irradiation controller 228R for controlling the headlight unit 210R is arranged. The irradiation controller 228R also performs control of the swivel actuator 222, the leveling actuator 226, or the like.

The lamp unit 10 can include an aiming adjusting mechanism. For example, an aiming pivot mechanism (not shown) which becomes the center of oscillation when aiming adjustment is arranged at a connecting portion between the rod 226a of the leveling actuator 226 and the unit bracket 224. Additionally, the aforementioned aiming adjusting screws 220 are arranged at a distance from each other in the vehicle width direction at the lamp bracket 218. For example, if the two aiming adjusting screws 220 are rotated in the counterclockwise direction, the lamp unit 10 takes a forward tilted posture about the aiming pivot mechanism so that the optical axis O is adjusted downward. Similarly, if the two aiming adjusting screws 220 are rotated in the clockwise direction, the lamp unit 10 takes a rearward tilted posture about the aiming pivot mechanism so that the optical axis O is adjusted upward. Additionally, if the aiming adjusting screw 220 on the left in the vehicle width direction is rotated in the counterclockwise direction, the lamp unit 10 takes a right-turning posture about the aiming pivot mechanism so that the optical axis O is adjusted rightward. Additionally, if the aiming adjusting screw 220 on the right in the vehicle width direction is rotated in the counterclockwise direction, the lamp unit 10 takes a left-turning posture about the aiming pivot mechanism so that the optical axis O is adjusted leftward. This aiming adjustment is performed on the shipment of a vehicle or the inspection of a vehicle or when replacing the headlight unit 210R. Also, the headlight unit 210R is adjusted to a posture determined in the design, and control of the formation of a light distribution pattern of the present embodiment is performed on the basis of this posture.

The lamp unit 10 includes a shade mechanism 18 including a rotary shade 12, a bulb 14 serving as a light source, a lamp housing 17 which supports a reflector 16 on the inner wall thereof, and a projection lens 20. As the bulb 14, for example, an incandescent bulb, a halogen lamp, a discharge bulb, an LED, or the like can be used. The present embodiment shows an example in which the bulb 14 is constituted by a halogen lamp. The reflector 16 reflects the light emitted from the bulb 14. Also, the light from the bulb 14 and the light reflected by the reflector 16 are partially guided to the projection lens 20 via the rotary shade 12. In addition, illustration of the shade plates 24 which will be described below is omitted in Fig. 1.

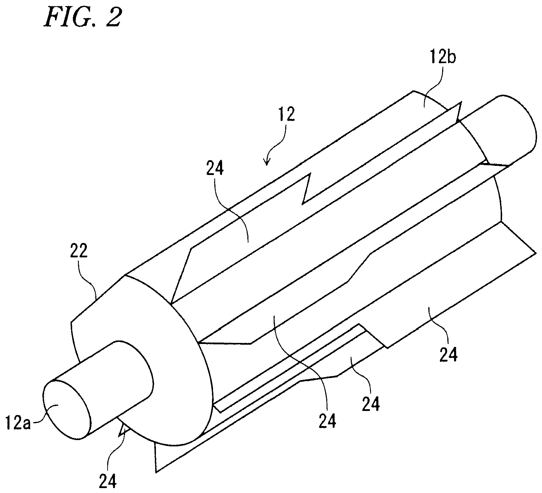

Fig. 2 is a schematic perspective view of the rotary shade. The rotary shade 12 is a cylindrical member which is rotatable about a rotating shaft 12a. Additionally, the rotary shade 12 has a cutout portion 22 which is partially cut out in the axial direction, and holds a plurality of plate-shaped shade plates 24 at an outer peripheral surface 12b excluding the cutout portion 22. The rotary shade 12 can move the cutout portion 22 or any one of the shade plates 24 to a rear focal position of the projection lens 20 on the optical axis O according to the angle of rotation thereof. This forms a light distribution pattern according to the shape of ridgeline portions of the shade plates 24 arranged on the optical axis O. For example, a low-beam light distribution pattern or a light distribution pattern partially including the features of a high-beam light distribution pattern can be formed by moving any one of the shade plates 24 of the rotary shade 12 on the optical axis O, thereby shading a portion of the light radiated from the bulb 14. Additionally, a high-beam light distribution pattern can be formed by moving the cutout portion 22 on the optical axis O, thereby bringing the light radiated from the bulb 14 into non-shaded light.

The rotary shade 12 is rotatable by, for example, the running of a motor, and can move the shade plates 24 or the cutout portion 22 for forming a desired light distribution pattern on the optical axis O by controlling the rotational amount of the motor. In addition, only a shading function may be given to the rotary shade 12 by omitting the cutout portion 22 of the outer peripheral surface 12b of the rotary shade 12. Also, in a case where a high-beam light distribution pattern is formed, for example, the solenoid or the like is driven so that the rotary shade 12 is retracted from the position of the optical axis O. By adopting such a configuration, for example, even if the motor which rotates the rotary shade 12 has failed, the rotary shade is fixed in a low-beam light distribution pattern or a light distribution pattern similar thereto. That is, it is possible to prevent with certainty the rotary shade 12 from being fixed in a posture for forming a high-beam light distribution pattern, thereby realizing a fail-safe function.

Returning to Fig. 1, at least a portion of the reflector 16 is formed in the shape of an elliptical spherical surface, and this elliptical spherical surface is set so that the cross-sectional shape including the optical axis O of the lamp unit 10 becomes at least a portion of an elliptical shape. The elliptical spherical portion of the reflector 16 has a first focal point substantially at the center of the bulb 14, and has a second focal point on a rear focal plane of the projection lens 20.

The projection lens 20 is arranged on the optical axis O which extends the longitudinal direction of the vehicle. The bulb 14 is arranged behind a rear focal plane which is a focal plane including a rear focus of the projection lens 20. The projection lens 20 includes a planoconvex aspheric lens whose front surface is a convex surface and whose rear surface is a plane surface, and projects a light source image formed on a rear focal plane onto a virtual vertical screen ahead of the vehicle lamp system 200 as an inverted image. In addition, the configuration of the lamp unit 10 is not particularly limited thereto, and may be a reflective lamp unit which does not have the projection lens 20 or the like.

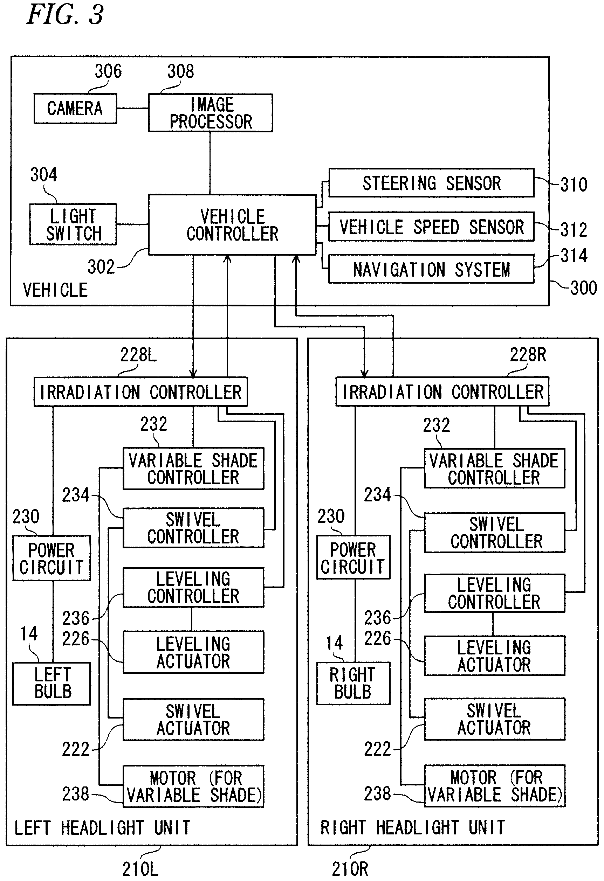

Fig. 3 is a functional block diagram illustrating the cooperation of operation between an irradiation controller of a headlight unit configured as described above, and a vehicle controller on the side of the vehicle. In addition, since the configuration of the right headlight unit 210R and the left headlight unit 210L are basically the same as described above, only the headlight unit 210R side will be described, and description of the headlight unit 210L side will be omitted.

The irradiation controller 228R of the headlight unit 210R controls a power circuit 230 on the basis of the information obtained from the vehicle controller 302 mounted on the vehicle 300, and executes turning-on control of the bulb 14. Additionally, the irradiation controller 228R controls a variable shade controller 232, a swivel controller 234, and a leveling controller 236 on the basis of the information obtained from the vehicle controller 302. The variable shade controller 232 controls rotation of the motor 238 connected to the rotating shaft 12a of the rotary shade 12 via a gear mechanism, and moves a desired shade plate 24 or cutout portion 22 on the optical axis O. In addition, rotational information showing the rotational state of the rotary shade 12 is provided to the variable shade controller 232 from a detection sensor, such as an encoder included in the motor 238 or the rotary shade 12. This produces an accurate rotational control by feedback control.

The swivel controller 234 controls the swivel actuator 222 so as to adjust the angle of the optical axis O of the lamp unit 10 with respect to the vehicle width direction. For example, the optical axis O of the lamp unit 10 is directed to the advancing direction from the optical axis when turning, such as traveling along a curved road or right or left turning travel. Additionally, the leveling controller 236 controls the leveling actuator 226 to adjust the optical axis of the lamp unit 10 with respect to the up-and-down direction of the vehicle. For example, the posture of the lamp unit 10 is adjusted according to the forward tilting, and rearward tilting of the vehicle posture during acceleration and deceleration, thereby adjusting the reaching distance of the front irradiation light to an optimal distance. The vehicle controller 302 provides the same information even regarding the headlight unit 210L, and the irradiation controller 228L (controller or control device) provided in the headlight unit 210L performs the same control as the irradiation controller 228R.

In the present embodiment, a light distribution pattern formed by the headlight units 210L and 210R can be switched according to the operation content of a light switch 304 by a driver. In this case, the irradiation controllers 228L and 228R control the motor 238 via the variable shade controller 232 according to the operation of the light switch 304, thereby determining a light distribution pattern formed by the lamp unit 10.

The headlight units 210L and 210R of the present embodiment may perform automatic control so as to detect the conditions around the vehicle by various sensors irrespective of the operation of the light switch 304, thereby forming a light distribution pattern which is optimal for the state of the vehicle 300 or the conditions around the vehicle. For example, in a case where it is not possible to detect that a leading vehicle, an oncoming vehicle, a pedestrian, or the like is present ahead of a subject vehicle, the irradiation controllers 228L and 228R determine that glare should be prevented from being imparted on the basis of the information obtained from the vehicle controller 302, and a low-beam light distribution pattern is formed by the lamp unit 10. For example, in a case where it is possible to detect that a leading vehicle, an oncoming vehicle, a pedestrian, or the like is not present ahead of a subject vehicle, the irradiation controllers 228L and 228R determine that driver visibility should be improved, and a high-beam light distribution pattern without shading by the rotary shade 12 is formed. Additionally, in a case where it is possible to form a special high-beam light distribution pattern or a special low-beam light distribution pattern which will be described below in addition to a low-beam light distribution pattern and a high-beam light distribution pattern, an optimal light distribution pattern in consideration of a preceding vehicle may be formed according to the presence of the preceding vehicle. Such control mode may be referred to as an ADB (Adaptive Driving Beam) mode.

In order to detect an object, such as a leading vehicle, an oncoming vehicle, or the like, in this way, a camera 306, such as a stereoscopic camera, is connected to the vehicle controller 302 as the recognition means of an object. The image frame data taken by the camera 306 is subjected to predetermined image processing, such as object recognition processing, in an image processor 308, and the recognition result is provided to the vehicle controller 302. For example, in a case where the data including feature points showing a vehicle held in advance by the vehicle controller 302 is present in the recognition result data provided from the image processor 308, the vehicle controller 302 recognizes the presence of the vehicle, thereby providing the information to the irradiation controllers 228L and 228R. The irradiation controllers 228L and 228R receive the information regarding the vehicle from the vehicle controller 302, thereby forming an optimal light distribution pattern in consideration of the vehicle. Here, the above "feature points showing a vehicle" are, for example, a light spot with a predetermined luminous intensity or more which appears in an estimated presence region of the headlight of a preceding vehicle or a beacon light, such as a tail light. Additionally, for example, in a case where the data including feature points showing a pedestrian which is held in advance is present in the recognition result data provided from the image processor 308, the vehicle controller 302 provides the information to the irradiation controllers 228L and 228R, and the irradiation controllers 228L and 228R form an optimal light distribution pattern in consideration of the pedestrian.

Additionally, the vehicle controller 302 can also acquire the information from a steering sensor 310, a vehicle speed sensor 312, and the like which are typically mounted on the vehicle 300. Thereby, the irradiation controllers 228L and 228R can select a light distribution pattern to be formed according to the traveling state or traveling posture of the vehicle 300, or can change the direction of the optical axis O to change a light distribution pattern simply and easily. For example, in a case where the vehicle controller 302 has determined that the vehicle is turning on the basis of the information from the steering sensor 310, the irradiation controllers 228L and 228R which have received the information from the vehicle controller 302 can select a shade plate 24 for forming a light distribution pattern which improves the field of view in a turning direction. Additionally, the field of view may be improved by controlling the swivel actuator 222 by the swivel controller 234 to direct the optical axis O of the lamp unit 10 to a turning direction, without changing the rotational state of the rotary shade 12. Such a control mode may be referred to as a turning sensitive mode.

Additionally, when the vehicle travels at high speed at night, it is preferable that the front of the subject vehicle may be illuminated so that an oncoming vehicle or a leading vehicle which is approaching from a distant area, or a road sign, a message board, or the like can be recognized as soon as possible. Thus, when the vehicle controller 302 has determined that the vehicle is traveling at high speed on the basis of the information from the vehicle speed sensor 312, the irradiation controllers 228L and 228R may select a shade plate 24 for forming a low-beam light distribution pattern in an expressway mode in which a portion of the shape of the low-beam light distribution pattern is changed. The same control can also be realized by controlling the leveling actuator 226 by the leveling controller 236 to change the lamp unit 10 to a forward tilted posture. The auto-leveling control during acceleration or deceleration by the above-described leveling actuator 226 is the control of keeping the irradiation distance constant. If the height of a cut-off line is positively controlled using this control, the control equivalent to the control of rotating the rotary shade 12 to select a different cut-off line can be performed. Such a control mode may be referred to as a speed sensitive mode.

Additionally, the vehicle controller 302 is also able to acquire the information from an inter-vehicle distance sensor (not shown) which is mounted on the vehicle 300, and the irradiation controllers 228L and 228R can adjust the height of a cut-off line of a light distribution pattern according to the distance (inter-vehicle distance) of a preceding vehicle and a subject vehicle. For example, in a case where the vehicle controller 302 has determined that the preceding vehicle is relatively far away on the basis of the information from the inter-vehicle sensor, the irradiation controllers 228L and 228R control the leveling actuator 226 by the leveling controller 236, thereby changing the lamp unit 10 to a rearward tilted posture. By slightly raising the cut-off line of the low-beam light distribution pattern thereby, driver visibility can be improved while preventing glare from being imparted to the preceding vehicle. A light distribution pattern formed by such control may be referred to as a dynamic cut-off line light distribution pattern.

In addition, the adjustment of the optical axis of the lamp unit 10 can also be performed without using the swivel actuator 222 and the leveling actuator 226. For example, the visibility in a desired direction may be improved by turning the lamp unit 10 or bringing the lamp unit into a forward tilted posture or rearward tilted posture so as to execute aiming control in real time.

In addition, the vehicle controller 302 can also acquire shape information or form information regarding a road, installation information regarding a road sign, or the like from a navigation system 314. By acquiring these kinds of information in advance, the irradiation controllers 228L, and 228R can control the leveling actuator 226, the swivel actuator 222, the motor 238, and the like, thereby smoothly forming the light distribution pattern suitable for a road being traveled along. Such a control mode may be referred to as a navigation sensitive mode. The automatic formation control of a light distribution pattern including the various control modes described above is performed, for example, in a case where automatic formation control of a light distribution pattern is instructed by the light switch 304.

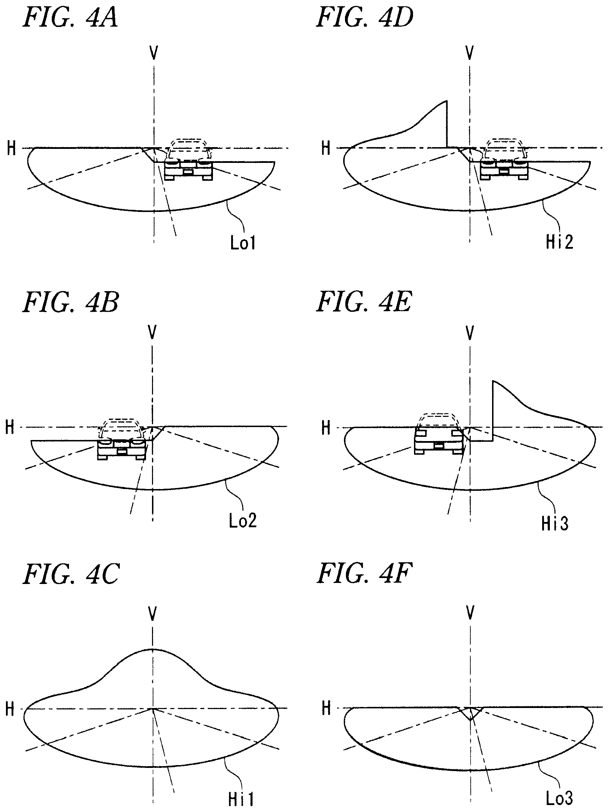

Next, a light distribution pattern which can be formed by the lamp unit 10 of each of the headlight units 210L and 210R will be described. Figs. 4A to 4F are explanatory views showing the shapes of light distribution patterns. In addition, Figs. 4A to 4F show a light distribution pattern formed on a virtual vertical screen which is arranged at a predetermined position ahead of a lamp, for example, at a position 25 m ahead of the lamp.

As described above, the headlight unit 210L and the headlight unit 210R have substantially the same configuration and it is accordingly possible to form the same light distribution pattern. Additionally, as shown in Fig. 1, since the projection lens 20 includes a planoconvex aspheric lens whose front surface is a convex surface and whose rear surface is a plane surface, respective light distribution patterns excluding the high-beam light distribution pattern have images in which light source images including the portions shaded by the shade plates 24 corresponding to these patterns are inverted vertically and horizontally. Accordingly, the cut-off line shapes of the respective light distribution patterns and the ridgeline shapes of the respective shade plates 24 correspond to each other.

The light distribution pattern shown in Fig. 4A is a basic low-beam light distribution pattern Lo1. The basic low-beam light distribution pattern Lo1 is a light distribution pattern which has been considered so that glare is not imparted to a preceding vehicle or a pedestrian while driving on the left-hand side. The basic low-beam light distribution pattern Lo1 has: an opposite-lane-side cut-off line, which extends parallel to a horizontal line, which is on the right of a vertical line of an upper end thereof, a subject-lane-side cut-off line, which extends parallel to the horizontal line at a position higher than the opposite-lane-side cut-off line, on the left of the vertical line, and an oblique cut-off line which connects both the cutoff lines between the opposite-lane-side cut-off line and the subject-lane-side cut-off line, respectively. The oblique cut-off line extends at an inclination angle of 45° obliquely in the upper left direction from the point of intersection between the opposite-lane-side cut-off line and the vertical line V.

The light distribution pattern shown in Fig. 4B is a Dover-low-beam light distribution pattern Lo2 which forms a so-called "Dover low beam". The Dover low-beam light distribution pattern Lo2 is a light distribution pattern which has been considered so that glare is not imparted to a preceding vehicle or a pedestrian while driving on the right-hand side. The Dover-low-beam light distribution patterns Lo2 is line-symmetrical to the basic low-beam light distribution pattern Lo1 with the vertical line as a symmetrical axis.

The light distribution pattern shown in Fig. 4C is a high-beam light distribution pattern Hi1. The high-beam light distribution pattern Hi1 is a light distribution pattern which illuminates a front wide range and a distant area, and is formed, for example, when it is not necessary to consider glare imparted to a preceding vehicle or a pedestrian. Specifically, the high-beam light distribution pattern is formed in a case where neither a preceding vehicle nor a pedestrian is present or in a case where the preceding vehicle is present at a long distance to such a degree that glare is not received even if the preceding vehicle or the like forms the high-beam light distribution pattern Hi1. That is, the high-beam light distribution pattern Hi1 is a light distribution pattern which has an irradiation region on the opposite lane side above the horizontal line H.

The light distribution pattern shown in Fig. 4D is a left high-beam light distribution pattern Hi2 which forms a so-called "left piece high beam". The left piece high-beam light distribution pattern Hi2 is a special high-beam light distribution pattern which shades the opposite lane side of the high-beam light distribution pattern Hi1 while driving on the left-hand side and is radiated in a high-beam region only on the subject lane side. That is, the left piece high-beam light distribution pattern Hi2 is a light distribution pattern which has an irradiation region on the subject lane side above the horizontal line H and a non-irradiation region on the opposite lane side, respectively. The left piece high-beam light distribution pattern Hi2 is preferably used in a case where neither a preceding vehicle nor a pedestrian is present in the subject lane, and an oncoming vehicle or a pedestrian is present in the opposite lane, and can increase driver visibility by irradiation of a high beam only on the subject lane side without imparting glare to an oncoming vehicle or a pedestrian.

The light distribution pattern shown in Fig. 4E is a right piece high-beam light distribution pattern Hi3 which forms a so-called "right piece high beam". The right piece high-beam light distribution pattern Hi3 is a special high-beam light distribution pattern which shades the subject lane side of the high-beam light distribution pattern Hi1 while driving on the left and is radiated in a high-beam region only on the opposite lane side. That is, the right piece high-beam light distribution pattern Hi3 is a light distribution pattern which has an irradiation region on the opposite lane side above the horizontal line H and a non-irradiation region on the subject, respectively. The right piece high-beam light distribution pattern Hi3 is preferably used in a case where neither an oncoming vehicle nor a pedestrian is present in the opposite lane, and a preceding vehicle or a pedestrian is present in the subject lane, and can increase driver's visibility by irradiation of a high beam only on the opposite lane side without imparting glare to a preceding vehicle or a pedestrian.

The light distribution pattern shown in Fig. 4F is a V-beam light distribution pattern Lo3 which forms a so-called "V-beam". The V-beam light distribution pattern Lo3 is a special low-beam light distribution pattern in which both the subject lane side cut-off line and the opposite-lane-side cut-off line is comparable in height to the horizontal line H and which has intermediate features between a low beam and a high beam. The V-beam light distribution pattern Lo3 can be formed, for example, by overlapping a basic low-beam light distribution pattern Lo1L (for convenience of description, a symbol "L" is given after a symbol for each light distribution pattern in light distribution patterns formed by the headlight unit 210L and a symbol "R" is given after a symbol for each light distribution pattern in light distribution patterns formed by the headlight unit 210R; the same is true in the following) formed by the headlight unit 210L, and a Dover low-beam light distribution pattern Lo2R formed by the headlight unit 210R.

As described above, the basic low-beam light distribution pattern Lo1L has an oblique cut-off line, and the Dover low-beam light distribution pattern Lo2R is line-symmetrical to the basic low-beam light distribution pattern Lo1L. Therefore, the V-beam light distribution pattern Lo3 has a substantially V-shaped shading region formed by two oblique cut-off lines below the horizontal line H of a central portion. Additionally, since the basic low-beam light distribution pattern Lo1L and the Dover low-beam light distribution pattern Lo2R are overlapped on each other, the optical irradiation region of the V-beam light distribution pattern Lo3 on the opposite lane side is moved upward higher than the optical irradiation region of the basic low-beam light distribution pattern Lo1 on the opposite lane side. On the other hand, as for the Dover low-beam light distribution pattern Lo2, the optical irradiation region on the subject lane side moves upward. Accordingly, the V-beam light distribution pattern Lo3 becomes a light distribution pattern which can improve driver visibility more than the basic low-beam light distribution pattern Lo1 and the Dover low-beam light distribution pattern Lo2. The V-beam light distribution pattern Lo3 can increase driver visibility by the light irradiation to a height comparable to the horizontal line without imparting glare to a preceding vehicle or a pedestrian which is relatively far away.

The vehicle lamp system 200 related to the present embodiment can form a so-called split light distribution pattern, in addition to the above-described various light distribution patterns. This split light distribution pattern is a special high-beam light distribution pattern which has a shading region in a central portion above the horizontal line H and has high-beam regions on both sides of the shading region in the horizontal direction. The split light distribution pattern can be formed, for example, by overlapping a left piece high-beam light distribution pattern Hi2L formed by the headlight unit 210L and a right piece high-beam light distribution pattern Hi3R formed by the headlight unit 210R. In this case, the shading region is formed by the non-irradiation region above the horizontal line H of the left piece high-beam light distribution pattern Hi2L and the right piece high-beam light distribution pattern Hi3R, and high-beam regions on both sides of the shading region are formed by the irradiation region above the horizontal line H of the left piece high-beam light distribution pattern Hi2L and the right piece high-beam light distribution pattern Hi3R. The range of the shading region can be changed in the vehicle width direction by making the lamp units 10 of the headlight units 210L and 210R swivel to move at least one of the left piece high-beam light distribution pattern Hi2L and the right piece high-beam light distribution pattern Hi3R in the vehicle width direction (horizontal direction). That is, the split light distribution pattern is a light distribution pattern which has an irradiation region on the opposite lane side above the horizontal line H.

For example, when the vehicle controller 302 detects the presence of a preceding vehicle using the information obtained from the camera 306 in a state where the automatic formation control, for example, an ADB mode of a light distribution pattern is instructed by the light switch 304, the irradiation controllers 228L and 228R which have received the information from the vehicle controller 302 determine whether or not the preceding vehicle is within a range where the shading region can be formed. In a case where the vehicle in front is within a range where the shading region can be formed, the irradiation controllers 228L and 228R form a split light distribution pattern such that the preceding vehicle is included in the shading region. Additionally, the irradiation controllers 228L and 228R make the shading region deformed in conformity with the position of the vehicle in front which is moving, in response to an instruction from the vehicle controller 302. When the vehicle in front is out of the range where the shading region can be formed, the irradiation controllers 228L and 228R reduce the illuminance of at least one of the left piece high-beam light distribution pattern Hi2L and the right piece high-beam light distribution pattern Hi3R so that the preceding vehicle is not included in the upper irradiation region. Through the above control, driver visibility in other regions, particularly, right and left road-shoulder regions can be improved while glare is prevented from being imparted to the vehicle in front. In addition, the above "reduction" includes a case where the illuminance of a light distribution pattern is lowered to such a degree that glare is not imparted to a vehicle in front with the light distribution pattern being formed, and a case where the illuminance of the light distribution pattern is set to 0. In the case where the illuminance of the light distribution pattern is set to 0, a case where the irradiation controllers 228L and 228R perform switching to the basic low-beam light distribution pattern Lo1 is included.

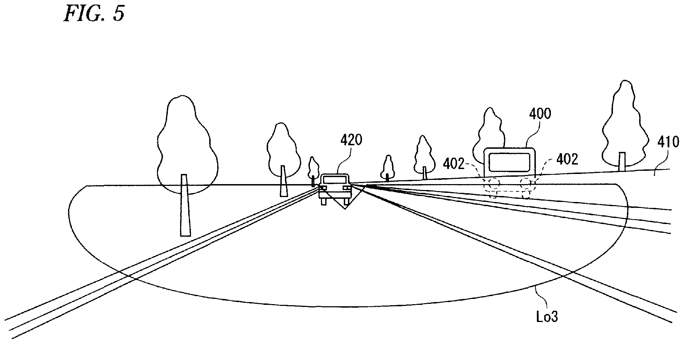

Subsequently, an example of the light distribution pattern formation control by the vehicle lamp system 200 including the above-described configuration will be described. Fig. 5 is a schematic view illustrating formation control of a light distribution pattern by the vehicle lamp system related to Embodiment 1.

The vehicle lamp system 200 related to the present embodiment executes the control of avoiding formation of a light distribution pattern which has an irradiation region on the opposite lane side above the horizontal line H in a case where a vehicle which travels in the opposite lane cannot be detected.

As described above, in the vehicle lamp system 200 related to the present embodiment, automatic formation control of a light distribution pattern is executed according to the position of a vehicle in front which is recognized on the basis of a light spot which is present in image frame data captured by the camera 306. Accordingly, a case where a vehicle which travels in the opposite lane in this control cannot be detected, as shown in Fig. 5, can include, for example a case where a shading body 410, such as a shading wall, a planting, or a greening fence, is present along the road between the subject lane and the opposite lane. In a case where the shading body 410 is present between the subject lane and the opposite lane, as seen from the subject vehicle, a headlight 402 of the oncoming vehicle 400 may be hidden by the shading body 410. As a result, there is a concern that the oncoming vehicle 400 may not be recognized. In this case, the irradiation controllers 228L and 228R perform a control so as to form a light distribution pattern which has an irradiation region on the opposite lane side above the horizontal line H, irrespective of whether the oncoming vehicle 400 is present in actuality. The light distribution pattern which has an irradiation region on the opposite lane side above the horizontal line H can include, for example, the high-beam light distribution pattern Hi1, the right piece high-beam light distribution pattern Hi3, and the split light distribution pattern.

If the light distribution pattern, which has an irradiation region on the opposite lane side above the horizontal line H is formed, the irradiation region on the opposite lane side above the light distribution pattern irradiates the opposite lane side beyond the shading body 410. Thereby, the oncoming vehicle 400 may receive glare due to the light which irradiates the opposite lane side beyond the shading body 410. Particularly, as shown in Fig. 5, in a case where the oncoming vehicle 400 is a truck or the like with a high seat position, the oncoming vehicle 400 is apt to receive the glare.

Thus, in the present embodiment, the irradiation controllers 228L and 228R perform a control so as to avoid formation of a light distribution pattern which has an irradiation region on the opposite lane side above the horizontal line H in a case where the shading body 410 is present along a road between the subject lane and the opposite lane. Thereby, even in a case where automatic formation control of a light distribution pattern according to the position of a vehicle in front is executed under conditions where the presence of the oncoming vehicle 400 is hardly detected since the shading body 410 is present, an appropriate light distribution pattern can be formed to avoid imparting glare to a vehicle in front.

The presence of the shading body 41 is determined on the basis of the information obtained from the navigation system 314. The determination of the presence of the shading body 410 is implemented by the vehicle controller 302. In a case where it is determined that the subject vehicle is traveling on a road where the possibility of the presence of the shading body 410 is high such as an elevated road, a bypass road, or a highway from the information from the navigation system 314, the vehicle controller 302 estimates that the shading body 410 is present, and transmits this information to the irradiation controllers 228L and 228R. The irradiation controllers 228L and 228R receive this information and avoid the formation of the light distribution pattern described above. A designer can appropriately set the type of a road where the shading body 410 is estimated to be present. In a case where it is determined that the information on a place where the shading body 410 is provided is included in the navigation system 314, the vehicle controller 302 may determine the presence of the shading body 410 using this body information.

Additionally, for example, the vehicle controller 302 may hold data including a feature point showing the shading body 410, and may determine that the shading body 410 is present in a case where this feature point is present in an image captured by the camera 306. Moreover, in an embodiment not covered by the claims, the presence of the shading body 410 may be determined using a sensor, such as a laser radar sensor, which can detect an object around the subject vehicle. Additionally, in a case where a median strip is positioned between the subject vehicle and the opposite lane, the shading body 410 is often provided in the median strip. Thus, in a case where the vehicle controller 302 has determined from the information of the navigation system 314 that the subject vehicle is traveling on a road where the median strip is provided or in a case where the median strip is detected by the camera 306 or the like, the vehicle controller may estimate that the shading body 410 is present.

In this way, the irradiation controllers 228L and 228R perform a control so as to avoid output of a control signal which forms a light distribution pattern which has an irradiation region on the opposite lane side above the horizontal line H in a case where the shading body 410 is present, and so as not to form the light distribution pattern. Therefore, even in a case where the shading body 410 is present, glare can be prevented from being imparted to the oncoming vehicle 400.

For example, the irradiation controllers 228L and 228R hold a normal pattern group control map which includes the basic low-beam light distribution pattern Lo1, the Dover low-beam light distribution pattern Lo2, the V-beam light distribution pattern Lo3, the high-beam light distribution pattern Hi1, the left piece high-beam light distribution pattern Hi2, the right piece high-beam light distribution pattern Hi3, and the split light distribution pattern as selectable light distribution patterns, and an avoiding pattern group control map which includes the basic low-beam light distribution pattern Lo1, the Dover low-beam light distribution pattern Lo2, the V-beam light distribution pattern Lo3, and the left piece high-beam distribution pattern Hi2 as selectable light distribution patterns. Also, the irradiation controllers 228L and the 228R implement formation control of a light distribution pattern according to the position of a vehicle in front using the normal pattern group control map in a case where the shading body 410 is not present, and implements formation control of a light distribution pattern according to the position of a vehicle in front using the avoiding pattern group control map in a case where the shading body 410 is present. In the state shown in Fig. 5, the shading body 410 is present, and the preceding vehicle 420 is present in a relatively distant area. Therefore, the irradiation controllers 228L and 228R select and form the V-beam light distribution pattern Lo3 from the avoiding pattern group control map.

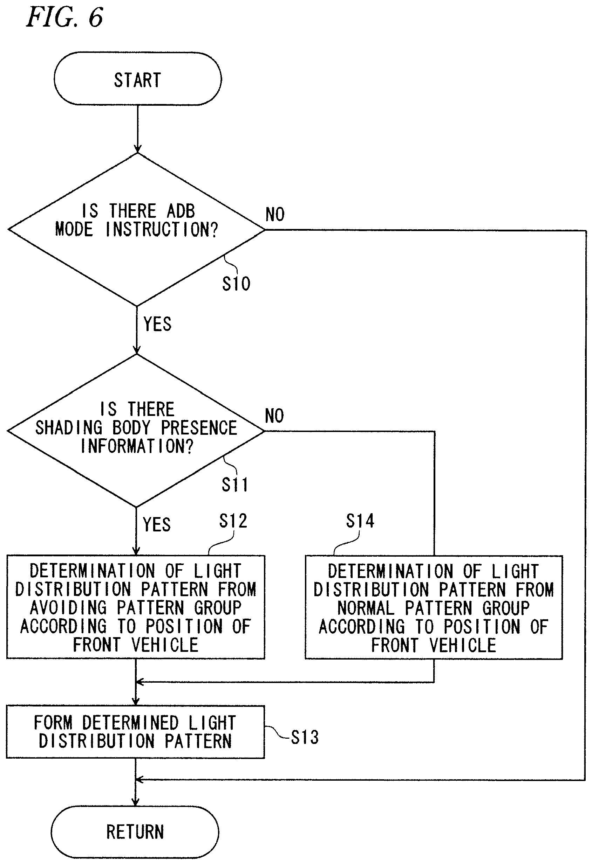

Fig. 6 is a control flow chart of the formation of a light distribution pattern in the vehicle lamp system related to Embodiment 1. In the flow chart of Fig. 6, the procedure of each part is shown by combinations of S (initial of Step) that means a step, and a numeral. Additionally, in a case where a certain determination processing is executed by the processing shown by a combination of S and a numeral and the determination result is positive, for example, (Y of S10) is shown by adding Y (initial of Yes). On the other hand, in a case where the determination result is negative, for example, (N of S10) is shown by adding N (initial of No). The irradiation controllers 228L and 228R repeatedly perform this flow at a predetermined timing.

First, the irradiation controllers 228L and 228R determine whether or not an execution instruction of the ADB mode is performed on the basis of the information obtained from the vehicle controller 302 (S10). If the execution instruction of the ADB mode is not performed (N of S10), a main routine is ended. If the execution instruction of the ADB mode is performed (Y of S10), the irradiation controllers 228L and 228R determine whether or not the information (shading body presence information) that the shading body 410 is present has been received from the vehicle controller 302 (S11).

If the shading body presence information (Y of S11) is present, the irradiation controllers 228L and 228R execute the ADB mode, using the avoiding pattern group control map, and determine a light distribution pattern to be formed, from an avoiding pattern group according to the position of a vehicle in front (S12). Then, the irradiation controllers 228L and 228R form the determined light distribution pattern (S13), and the main routine is ended.

If there is no shading body presence information (N of S11), the irradiation controllers 228L and 228R execute the ADB mode, using the normal pattern group control map, and determine a light distribution pattern to be formed, from a normal pattern group according to the position of a vehicle in front (S14). Then, the irradiation controllers 228L and 228R form the determined light distribution pattern (S13), and the main routine is ended.

As described above, in the vehicle lamp system 200 related to the present embodiment, the irradiation controllers 228L and 228R avoid formation of a light distribution pattern which has an irradiation region on the opposite lane side above the horizontal line in a case where a vehicle which travels on the opposite lane cannot be detected. Additionally, in the present embodiment, the irradiation controllers 228L and 228R avoid the formation of a light distribution pattern in a case where a vehicle which travels on the opposite lane cannot be detected and in a case where a shading body is present along a road between the subject lane and the opposite lane. That is, in a case where a structure which divides lanes is continuously present along a road, the low-beam light distribution pattern or a light distribution pattern with little upward light is formed. Thereby, an appropriate light distribution pattern which does not impart glare to a vehicle in front can be formed in a case where the control of automatically forming a light distribution pattern according to the position of the vehicle in front is implemented on a road where an oncoming vehicle cannot be detected.

### (Embodiment 2)

The vehicle lamp system 200 related to Embodiment 2 determines that there is a shading body in a case where a light spot of a predetermined time or less is detected, and avoids formation of a light distribution pattern which has an irradiation region on the opposite lane side above the horizontal line H. The present embodiment, not covered by the claims, will be described below. In addition, since the main components of the vehicle lamp system 200, the shapes of light distribution patterns which can be formed, and the like are the same as those of Embodiment 1, the same components as Embodiment 1 will be designated by the same reference numerals, and the description and illustration thereof will be appropriately omitted.

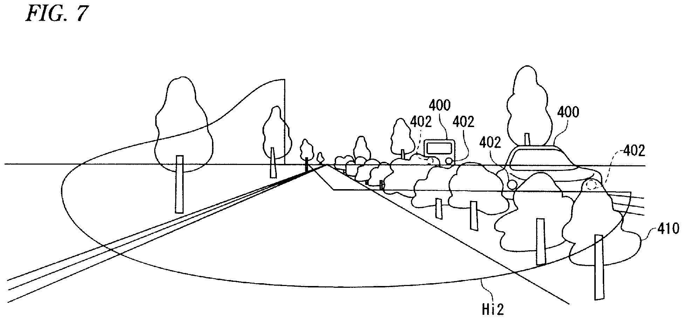

Fig. 7 is a schematic view illustrating formation control of a light distribution pattern by the vehicle lamp system related to Embodiment 2.

As shown in Fig. 7, for example, in a case where the shading body 410 is a planting consisting of a plurality of trees planted along a road, the light of the headlight 402 of the oncoming vehicle 400 can be momentarily viewed from gaps between the trees or from gaps between leaves of each tree. Additionally, for example, even in a case where the shading body 410 is a shading wall or the like in which a plurality of wall materials is coupled together, the light of the headlight 402 of the oncoming vehicle 400 can be momentarily viewed from gaps between adjacent wall materials. Additionally, there is a case where the light of the headlight 402 of the oncoming vehicle 400 can be momentarily viewed even depending on road profile, such as a case where there are undulations on a road ahead of the subject vehicle.

Thus, in the present embodiment, the irradiation controllers 228L and 228R perform a control so as to estimate that there is the shading body 410 in a case where a light spot of a predetermined time or less is detected, and so as to avoid formation of a light distribution pattern which has an irradiation region on the opposite lane side above the horizontal line H. In the state shown in Fig. 7, the shading body 410 is present and the preceding vehicle is not present. Therefore, the irradiation controllers 228L and 228R select and form the left piece high-beam light distribution pattern Hi2 from the avoiding pattern group control map. Here, the "predetermined time" can be appropriately set on the basis of experiments or simulations by a designer.

Even when a navigation system 314, a laser radar sensor, or the like are not present, both the controllers 302 can determine the presence of the shading body 410. Therefore, in a case where automatic formation control of a light distribution pattern according to a vehicle in front on a road where the shading body 410 is present even in a vehicle on which neither the navigation system 314 nor the laser radar sensor is mounted, an appropriate light distribution pattern which does not impart glare to the oncoming vehicle 400 can be formed. Additionally, the above-described formation of an appropriate light distribution pattern can be realized with a more inexpensive and simpler configuration compared to the case where the presence of the shading body 410 is determined using the navigation system 314, the laser radar sensor, or the like. Additionally, the above-described formation of an appropriate light distribution pattern can be realized with a more inexpensive and simpler configuration compared to the case where the vehicle controller 302 is made to hold data including a feature point showing the shading body 410 and detects the shading body 410 from the data of the image captured by the camera 306.

Additionally, in the vehicle lamp system 200 related to the present embodiment, the irradiation controllers 228L and 228R may avoid formation of a light distribution pattern which has an irradiation region on the opposite lane side above the horizontal line H, in a case where detection of a light spot of an oncoming vehicle of a predetermined time or less corresponding to a headlight is performed more than or equal to a predetermined number of times per unit time. In a configuration in which it is estimated that the shading body 410 is present in a case where detection of a light spot of a predetermined time or less is performed even a single time, for example, the shading body 410 may be estimated to be present even in a case where the oncoming vehicle 400 has executed a passing operation. On the other hand, presence of the shading body 410 can be more precisely estimated by estimating that the shading salary 410 is present in a case where detection of a light spot of a predetermined time or less is performed more than or equal to a predetermined number of times. In addition, when it is estimated that the shading body 410 is present in a case where detection of a light spot of a predetermined time or less is performed even a single time, formation of a light distribution pattern which has an irradiation region on the opposite lane side above the horizontal line H can be avoided in a shorter time. Therefore, the possibility of imparting glare to a vehicle in front can be further reduced. Here, the "predetermined time" and the "predetermined number of times" can be appropriately set on the basis of experiments or simulations by a designer.

As described above, in the vehicle lamp system 200 related to the present embodiment, the irradiation controllers 228L and 228R avoid formation of a light distribution pattern, which has an irradiation region on the opposite lane side above the horizontal line H in a case where a light spot of a predetermined time or less is detected. Therefore, in a case where automatic formation control of a light distribution pattern according to the position of a vehicle in front is implemented under the presence of a shading body, an appropriate light distribution pattern which does not impart glare to a vehicle in front with a more inexpensive and simpler configuration compared to a configuration in which the shading body 410 is detected using the navigation system 314, the camera 306, or the laser radar sensor can be formed.

The invention is not limited to the above-described embodiments, but the respective embodiments can be combined with each other, or alternations, such as various kinds of design changes, can be made on the basis of the knowledge of those skilled in the art. Embodiments in which such combinations or alternations are made are also included in the scope of the invention. The above-described respective embodiments, and new embodiments produced by combinations between the above-described embodiments and the following modifications have respective effects of the combined embodiments and modifications in combination.

The traveling state of the subject vehicle, the presence state of a vehicle in front, and the presence of the shading body 410 may be determined by either the vehicle controller 302 or the irradiation controllers 228. In a case where the irradiation controllers 228 implement the above determination, the information from various sensors or navigation systems is transmitted to the irradiation controllers 228 via the vehicle controller 302. Additionally, in a case where the irradiation controllers 228 implement the above determination, one or both of the irradiation controllers 228L and 228R can implement the determination. Additionally, although the irradiation controllers 228L and 228R determine a light distribution pattern to be formed in the above-described embodiments, the vehicle controller 302 may perform this determination. In this case, the irradiation controllers 228L and 228R control turning of the bulb 14 on and off, driving of the swivel actuator 222 and the motor 238, and the like on the basis of instructions from the vehicle controller 302.

## Claims

1. A control device (228, 228L, 228R, 302) for a vehicle lamp, **characterized by** the control device (228, 228L, 228R, 302) being configured to determine the presence of a shading body (410) along a road between a subject vehicle and an opposite lane on the basis of information obtained from a navigation system (314), and being configured to avoid output of a control signal forming a light distribution pattern (Hi1, Hi2, Hi3) which has an irradiation region on an opposite lane side above a horizontal line (H) when determining that the shading body (410) is present.

2. A vehicle lamp system comprising:
a vehicle lamp capable of forming a light distribution pattern (Hi1, Hi2, Hi3) which has an irradiation region on an opposite lane side above a horizontal line (H),
**characterized by** further comprising:
a vehicle controller (302) which is configured to determine the presence of a shading body (410) along a road between a subject vehicle and an opposite lane on the basis of information obtained from a navigation system (314), and
an irradiation controller (228, 228L, 228R) which is configured to avoid output of a control signal forming the light distribution pattern (Hi1, Hi2, Hi3) when the irradiation controller (228, 228L, 228R) receives from the vehicle controller (302) the information that a shading body (410) is present.

3. A control method of a vehicle lamp capable of forming a light distribution pattern (Hi1, Hi2, Hi3) which has an irradiation region on an opposite lane side above a horizontal line (H),
**characterized by** comprising:
determining the presence of a shading body (410) along a road between a subject vehicle and an opposite lane on the basis of information obtained from a navigation system (314), and
avoiding formation of the light distribution pattern (Hi1, Hi2, Hi3) when it is determined that a shading body (410) is present.

4. The control method of the vehicle lamp according to claim 3, wherein the information obtained from the navigation system (314) includes shape information or form information regarding the road, or installation information regarding a road sign.

5. The control method of the vehicle lamp according to claim 3, wherein the vehicle lamp is further capable of forming a V-beam light distribution pattern (Lo3) having a cut-off line on a subject lane side and a cut-off line on the opposite lane side which are comparable in height to the horizontal line (H), and having a substantially V-shaped shading region formed by two oblique cut-off lines below the horizontal line (H) of a central portion.

## Patentansprüche

1. Steuerungsvorrichtung (228, 228L, 228R, 302) für eine Fahrzeugleuchte, **dadurch gekennzeichnet, dass** die Steuerungsvorrichtung (228, 228L, 228R, 302) so ausgeführt ist, dass sie das Vorhandensein eines abschattenden Körpers (410) an einer Straße zwischen einem eigenen Fahrzeug und einer Gegenfahrbahn auf Basis von einem Navigationssystem (314) ermittelter Informationen feststellt, und so ausgeführt ist, dass sie Ausgabe eines Steuerungssignals vermeidet, das ein Lichtverteilungsmuster (Hi1, Hi2, Hi3) erzeugt, das einen Beleuchtungsbereich auf einer Seite der Gegenfahrbahn oberhalb einer horizontalen Linie (H) aufweist, wenn festgestellt wird, dass der abschattende Körper (410) vorhanden ist.

2. Fahrzeugleuchten-System, das umfasst:
eine Fahrzeugleuchte, die ein Lichtverteilungsmuster (Hi1, Hi2, Hi3) erzeugen kann, das einen Beleuchtungsbereich an einer Seite der Gegenfahrbahn oberhalb einer horizontalen Linie (H) aufweist,
**dadurch gekennzeichnet, dass** es des Weiteren umfasst:
eine Fahrzeug-Steuerungseinrichtung (302), die so ausgeführt ist, dass sie das Vorhandensein eines abschattenden Körpers (410) an einer Straße zwischen einem eigenen Fahrzeug und einer Gegenfahrbahn auf Basis von einem Navigationssystem (314) ermittelter Informationen feststellt, sowie
eine Beleuchtungs-Steuerungseinrichtung (228, 228L, 228R), die so ausgeführt ist, dass sie Ausgabe eines Steuerungssignals vermeidet, das das Lichtverteilungsmuster (Hi1, Hi2, Hi3) erzeugt, wenn die Beleuchtungs-Steuerungseinrichtung (228, 228L, 228R) von der Fahrzeug-Steuerungseinrichtung (302) die Information empfängt, dass ein abschattender Körper (410) vorhanden ist.

3. Verfahren zum Steuern einer Fahrzeugleuchte, die in der Lage ist, ein Lichtverteilungsmuster (Hi1, Hi2, Hi3) zu erzeugen , das einen Beleuchtungsbereich auf der Seite einer Gegenfahrbahn oberhalb einer horizontalen Linie (H) aufweist,
**dadurch gekennzeichnet, dass** es umfasst:
Feststellen des Vorhandenseins eines abschattenden Körpers (410) an einer Straße zwischen einem eigenen Fahrzeug und einer Gegenfahrbahn auf Basis von Informationen, die von einem Navigationssystem (314) ermittelt werden, sowie
Vermeiden von Erzeugung des Lichtverteilungsmusters (Hi1, Hi2, Hi3), wenn festgestellt wird, dass ein abschattender Körper (410) vorhanden ist.

4. Verfahren zum Steuern der Fahrzeugleuchte nach Anspruch 3, wobei die von dem Navigationssystem (314) ermittelten Informationen Verlaufs-Informationen oder Form-Informationen bezüglich der Straße oder Installations-Informationen bezüglich eines Straßenschildes enthalten.

5. Verfahren zum Steuern der Fahrzeugleuchte nach Anspruch 3, wobei die Fahrzeugleuchte des Weiteren in der Lage ist, ein V-Strahl-Lichtverteilungsmuster (Lo3) zu erzeugen, das eine Hell-Dunkel-Grenze auf einer Seite der eigenen Fahrbahn und eine Hell-Dunkel-Grenze auf einer Seite der Gegenfahrbahn aufweist, die hinsichtlich der Höhe mit der horizontalen Linie (H) vergleichbar sind, und einen im wesentlichen V-förmigen Abschattungsbereich aufweist, der durch zwei schräge Hell-Dunkel-Grenzen unterhalb der horizontalen Linie (H) eines Mittelabschnitts gebildet wird.

## Revendications

1. Dispositif de commande (228, 228L, 228R, 302) pour un feu de véhicule, **caractérisé par** le dispositif de commande (228, 228L, 228R, 302) qui est configuré pour déterminer la présence d'un corps d'ombrage (410) le long d'une route entre un véhicule sujet et une voie opposée sur la base de l'information obtenue à partir d'un système de navigation (314), et qui est configuré pour éviter une sortie d'un signal de commande formant une configuration de distribution de lumière (Hi1, Hi2, Hi3) qui a une zone d'irradiation sur un côté de voie opposée au-dessus d'une ligne horizontale (H) lorsque l'on détermine que le corps d'ombrage (410) est présent.

2. Système de feu de véhicule comprenant :
un feu de véhicule capable de former une configuration de distribution de lumière (Hi1, Hi2, Hi3) qui a une zone d'irradiation sur un côté de voie opposée au-dessus d'une ligne horizontale (H),
**caractérisé en ce qu'**il comprend en outre :
un circuit de commande de véhicule (302) qui est configuré pour déterminer la présence d'un corps d'ombrage (410) le long d'une route entre un véhicule sujet et une voie opposée sur la base d'une information obtenue à partir d'un système de navigation (314), et
un circuit de commande d'irradiation (228, 228L, 228R) qui est configuré pour éviter une sortie d'un signal de commande formant la configuration de distribution de lumière (Hi1, Hi2, Hi3) quand le circuit de commande d'irradiation (228, 228L, 228R) reçoit du circuit de commande de véhicule (302) l'information qu'un corps d'ombrage (410) est présent.

3. Procédé de commande d'un feu de véhicule capable de former une configuration de distribution de lumière (Hi1, Hi2, Hi3) qui a une zone d'irradiation sur un côté de voie opposée au-dessus d'une ligne horizontale (H),
**caractérisé en ce qu'**il comprend le fait de :
déterminer la présence d'un corps d'ombrage (410) le long d'une route entre un véhicule sujet et une voie opposée sur la base d'une information obtenue à partir d'un système de navigation (314), et
éviter une formation de la configuration de distribution de lumière (Hi1, Hi2, Hi3) lorsque l'on détermine qu'un corps d'ombrage (410) est présent.

4. Procédé de commande du feu de véhicule selon la revendication 3, selon lequel l'information obtenue à partir du système de navigation (314) comprend de l'information de forme ou de l'information de conformation concernant la route, ou de l'information d'installation concernant un panneau routier.

5. Procédé de commande du feu de véhicule selon la revendication 3, selon lequel le feu de véhicule est en outre capable de former une configuration de distribution de lumière à faisceau en V (Lo3) ayant une ligne de coupure sur un côté de voie de sujet et une ligne de coupure sur le côté de voie opposée qui sont comparables en hauteur à la ligne horizontale (H), et ayant une zone d'ombrage sensiblement en forme de V grâce à deux lignes de coupure obliques en dessous de la ligne horizontale (H) d'une partie centrale.
